# EUROPÄISCHE PATENTANMELDUNG

(11) **EP 1 154 542 A1**
(43) Veröffentlichungstag der Anmeldung: **14.11.2001**
(21) Anmeldenummer: 01110553.3
(22) Anmeldetag: 30.04.2001
(51) Int. Cl.: H02K 3/30, H02K 3/40, H01F 5/06

(54) **Isolierung von Spulen**

(30) Priorität: 12.05.2000 DE 10023207
(71) Anmelder: ALSTOM Power N.V., 1101 CS Amsterdam (NL)
(72) Erfinder: Baumann, Thomas, Dr., 5430 Wettingen (CH); Oesterheld, Jörg, Dr., 5413 Birmenstorf (CH); Schulz, Daniel, 8802 Kilchberg (CH)
(74) Vertreter: Pöpper, Evamaria, Dr.

(57) **Zusammenfassung**

Die Erfindung betrifft ein Verfahren zum Aufbringen der Hauptisolierung von Spulenurformen, insbesondere für Statorwicklungen, wobei die Spulenurform einen rechteckigen Querschnitt aufweisen und die Hauptisolierung aus Elastomer besteht.

## Beschreibung

### Technisches Gebiet

Die Erfindung betrifft ein Verfahren zur Isolierung von Statorwicklungen für rotierende elektrische Maschinen, insbesondere für Gleichstrommaschinen und Wechselstrommaschinen.

### Stand der Technik

Im allgemeinen weisen derartige elektrische Maschinen einen Stator und einen Rotor auf, um mechanische Energie in elektrische Energie umzuwandeln (Generator) oder, um umgekehrt, elektrische Energie in mechanische Energie umzuwandeln (Elektromotor). In den Leitern der Statorwicklungen werden, je nach Betriebszustand der elektrischen Maschine, Spannungen erzeugt. Daher müssen die Leiter der Statorwicklungen entsprechend isoliert werden, um einen Kurzschluß zu vermeiden.

Statorwicklungen in elektrischen Maschinen können unterschiedlich aufgebaut sein. Es besteht die Möglichkeit mehrere gegeneinander isolierte Einzelleiter zu bündeln und das so entstandene Leiterbündel, welches oft als Leiterstab bezeichnet wird, mit einer sogenannten Hauptisolierung zu versehen. Zur Herstellung der Statorwicklungen werden mehrere Leiterstäbe an ihren Stirnflächen miteinander verbunden. Diese Verbindung kann beispielsweise über eine Metallplatte erfolgen, an die sowohl die jeweils isolierten Einzelleiter des ersten Leiterstabs als auch die jeweils isolierten Einzelleiter des zweiten Leiterstabs leitend angeschlossen werden. Daher sind die Einzelleiter des Leiterstabes im Bereich der Metallplatte nicht voneinander isoliert.

Alternativ zur Bündelung der Einzeleiter in Leiterstäbe wird ein langer, isolierter Einzelleiter zu einer ebenen, ovalen Spule gewickelt, die Spulenurform oder Fisch genannt wird. In einem anschließenden Vorgang, der sogenannten Spreizung, werden die Spulenurformen bzw. Fische in ihre endgültige Form überführt und in den Stator eingebaut.

In beiden oben beschriebenen Fertigungstechniken können sowohl runde als auch rechteckige Einzelleiter eingesetzt werden. Die für die Statorwicklungen aus mehreren Einzelleitern gefertigten Leiterstäbe bzw. Spulenurformen können wiederum jeweils runde bzw. rechteckige Querschnitte haben. In der vorliegenden Erfindung werden bevorzugt Leiterstäbe bzw. Spulenurformen mit rechteckigem Querschnitt, die aus rechteckigen Einzelleitern gefertigt wurden, betrachtet. Die Leiterstäbe können sowohl verroebelt sein d.h. mit gegeneinander verdrillten Einzelleitern, als auch nicht verroebelt sein d.h. mit unverdrillten, zueinander parallel verlaufenden Einzelleitern.

Gemäß dem Stand der Technik wird zur Isolierung der Statorwicklungen (z.B. Leiterstäbe, Spulenurformen, Spulen) in der Regel Glimmerpapier, welches aus mechanischen Gründen durch einen Glasgewebeträger verstärkt ist, in Bandform um den Leiter gewickelt. Anschließend wird der umwickelte Leiter, welcher gegebenenfalls nach der Bewicklung noch verformt wird, mittels eines aushärtenden Harzes imprägniert, was zu einer duroplastischen, nicht schmelzbaren Isolierung führt. Es sind ferner glimmerhaltige Isolierungen mit thermoplastischer Matrix bekannt, die ebenfalls in Bandform auf den Leiter aufgebracht werden, wie beispielsweise Asphalt, Schellack (Brown Boveri Review Vol. 57, S. 15: R. Schuler; "Insulation Systems for High-Voltage Rotating Machines") Polysulfon und Polyetheretherketon (DE 43 44044 A1). Diese Isolierungen sind oberhalb der Schmelztemperatur der Matrix wieder plastisch verformbar.

Diese durch Umwickeln aufgebrachten Isolierungen von Statorwicklungen weisen den Nachteil auf, daß Ihre Fertigung zeit- und kostenintensiv ist. In diesem Zusammenhang sind der Wickelprozeß und der Imprägnierprozeß besonders zu erwähnen, welche aufgrund der physikalischen Eigenschaften des Glimmerpapieres und des Imprägnierharzes nicht mehr wesentlich beschleunigt werden können. Ferner ist dieser Fertigungsprozeß gerade bei dicken Isolierungen fehleranfällig, wenn sich das Glimmerpapier nur unzureichend an die Statorwicklung anpaßt. Insbesondere können durch eine ungenügende Justierung der Wickelmaschine nach dem Umwickeln der Statorwicklung in dem Glimmerpapier Falten und Risse auftreten, beispielsweise durch einen zu steilen oder zu flachen Winkel zwischen dem Glimmerpapier und dem Leiter oder durch eine ungeeignete statische oder dynamische Zugkraft, welche beim Umwickeln auf das Glimmerpapier wirkt. Ferner kann es durch zu großen Bandauftrag zu Überpressungen kommen, die eine gleichmäßige Durchimprägnierung der Isolierung in der Imprägnierform verhindern. Somit kann eine lokal oder allgemein fehlerhafte Isolierung erzeugt werden, welche eine reduzierte Kurzzeit- und/oder Langzeitfestigkeit aufweist. Dies setzt die Lebensdauer von derartigen Isolierungen für Statorwicklungen erheblich herab.

Ferner sind aus der Kabeltechnik Herstellungsverfahren zur Ummantelung von Leiterbündeln bekannt, wobei stets Leiterbündel mit rundem Querschnitt in einem Extrusionsprozeß mit einem Thermoplast oder mit Elastomeren ummantelt werden. Die Druckschrift US-A-5,650,031, welche den gleichen Gegenstand wie die WO 97/11831 betrifft, beschreibt ejn derartiges Verfahren zur Isolierung von Statorwicklungen, bei welchem die Statorwicklung durch eine zentrale Bohrung eines Extruders geführt wird. Dabei wird die Statorwicklung, welche eine komplexe Form aufweist, mit einem extrudierten thermoplastischen Material gleichzeitig an jeder Seite der komplexen Form insbesondere durch eine Ko-Extrusion ummantelt.

Des weiteren sind in der Kabeltechnik polymere Isolierungen bekannt, welche auf die Kabel mittels einer Warmschrumpftechnik aufgebracht werden. Es handelt sich dabei um vorfabrizierte Schläuche mit rundem Querschnitt aus vernetzbaren Thermoplasten, Elastomeren, Polyvinylidenfluorid, PVC, Silikonelastomer oder Teflon. Diese Materialien werden nach der Fabrikation im erwärmten Zustand gedehnt und abgekühlt. Nach der Abkühlung behält das Material seine gedehnte Form bei.

Dies geschieht beispielsweise dadurch, daß sich kristalline Zentren bilden, welche die gestreckten Makromoleküle fixieren. Nach erneuter Erwärmung über den kristallinen Schmelzpunkt hinaus lösen sich die kristallinen Zonen auf, wobei die Makromoleküle wieder ihren ungedehnten Zustand einnehmen und somit die Isolierung aufgeschrumpft wird. Ferner sind Kaltschrumpf-Schläuche bekannt, die im kalten Zustand mechanisch aufgeweitet werden. Im aufgeweiteten Zustand werden diese Schläuche über eine Stützkonstruktion gezogen, welche die Schläuche dauerhaft im gedehnten Zustand hält. Nachdem die Schläuche über die zu isolierenden Bauteile geschoben und fixiert worden sind, wird die Stützkonstruktion in geeigneter Weise entfernt, beispielsweise durch Herausziehen einer spiralförmig perforierten Stützkonstruktion. Derartige Schrumpftechniken können jedoch bei Statorwicklungen mit rechteckigem Querschnitt nicht verwendet werden, da die Schläuche mit rundem Querschnitt an den Kanten der rechteckigen Leiter entweder unmittelbar nach dem Schrumpfen oder nach einer kurzen Belastung während des Betriebs der elektrischen Maschine aufgrund der thermischen und mechanischen Beanspruchung leicht reißen.

Bereits bei der Herstellung der Statorwicklungen, insbesondere beim Biegen der Leiter, und beim Handling, insbesondere beim Einbau in den Stator, muß die Isolierung eine beachtlich hohe mechanische Beanspruchung verkraften, welche die Isolierung der Statorwicklungen beschädigen kann. Darüber hinaus unterliegt die Isolierung der Statorwicklungsleiter beim Betrieb der elektrischen Maschine einer kombinierten Beanspruchung. Einerseits wird die Isolierung zwischen dem Leiter, an welchem eine hohe Spannung anliegt, und dem Stator durch ein resultierendes elektrisches Feld dielektrisch beansprucht. Andererseits ist die Isolierung durch die im Leiter erzeugte Wärme einer thermischen Wechselbeanspruchung ausgesetzt, wobei beim Durchfahren der jeweiligen Betriebszustände der Maschine ein hohes Temperaturgefälle in der Isolierung vorliegt. Aufgrund der unterschiedlichen Ausdehnung der beteiligten Materialien treten auch mechanische Wechselbeanspruchungen auf. Dabei kommt es zum einen zu einer Scherbeanspruchung der Verklebung zwischen Leiter und Isolierung und zum anderen besteht an der Grenzfläche zwischen der Isolierung und der Nutwand des Stators die Gefahr der Abrasion. Aufgrund dieser hohen Beanspruchungen kann eine Rißbildung der Isolierung der Statorwicklungen auftreten, welche einen Kurzschluß verursacht. Folglich kommt es zum Ausfall der gesamten elektrischen Maschine, wobei die Reparatur mit einem hohen zeitlichen und kostenintensiven Aufwand verbunden ist.

### Darstellung der Erfindung

Hier setzt die Erfindung an. Der Erfindung, wie sie in den Ansprüchen gekennzeichnet ist, liegt die Aufgabe zugrunde, ein Verfahren zur Isolierung von Statorwicklungen für rotierende elektrische Maschinen zu schaffen, wobei isolierte Statorwicklungen hergestellt werden, welche die Isolierung der Statorwicklung über die vorgesehene Lebensdauer der elektrischen Maschine gewährleisten.

Diese Aufgabe wird durch das Verfahren gemäß den Merkmalen des unabhängigen Anspruchs 1 gelöst.

Die Erfindung benutzt die hohe Elastizität des Elastomers bei gleichzeitig hoher thermischer und elektrischer Beanspruchbarkeit. Bei höherer thermischer Belastung wird vorteilhaft Silikonelastomer verwendet. Vorteilhaft wird die Hauptisolierung auf Spulenurformen mit rechteckigem Querschnitt aufgebracht.

In einem besonders bevorzugten Verfahren werden die Spulenurformen erst nach der Ummantelung mit dem Elastomer in ihre endgültige Form gebracht. Durch das Biegen der Evolventen wird die aufgebrachte Isolierung stark gedehnt. Die erfindungsgemäße Verwendung von Elastomer erweist sich hierbei als besonders vorteilhaft, da sie die mechanische, elektrische bzw. thermische Beeinträchtigung der durch das Biegen beanspruchten Isolierung reduziert bzw. gänzlich verhindert.

Elastomere als Material für die Hauptisolierung begünstigen die Anwendung von Spritzgußverfahren. Die einzelnen Teile der Spritzgußform werden bevorzugt als Baukastensystem ausgebildet, um damit die häufiger vorkommenden Geometrien der Spulenurformen abzudecken.

Bevorzugt werden die Spulenurformen durch Abstandselemente bzw. justierbare Dorne in der Gußform zentriert. Die Zentrierung muß nicht so erfolgen, daß der Hohlraum zwischen Leiterstab und Gußform an jeder Stelle die gleiche Höhe aufweist. Es ist innerhalb des Rahmens der Erfindung auch Hauptisolierungen mit unterschiedlichen Dicken um die Spulenurform bereitzustellen. Eine gleichmäßige Dicke der Hauptisolierung ist aber eine bevorzugte Ausführungsform.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1a: einen Querschnitt durch eine Spritzgußform in der zwei Schenkel einer Spulenurform durch Abstandselemente in der Gußform zentriert werden;
- Figur 1b: einen Längsschnitt durch eine Spritzgußform in der eine Spulenurform durch Abstandselemente in der Gußform zentriert wird;
- Figur 1c: einen Längsschnitt durch eine Spritzgußform in der eine Spulenurform durch Abstandselemente unterschiedlicher Form in der Gußform zentriert wird;
- Figur 2a: einen Querschnitt durch eine Spritzgußform in der zwei Spulenurformen durch justierbare Dorne in der Gußform zentriert werden;
- Figur 2b: einen Längsschnitt durch eine Spritzgußform in der eine Spulenurform durch justierbare Dorne in der Gußform zentriert wird;

- Figur 3: eine Detailansicht des justierbaren Dorns aus Figur 2b; und
- Figur 4a: eine Extrudiervorrichtung; und
- Figur 4b: eine Spulenurform in einer Extrudiervorrichtung.

In den Figuren sind nur die für das Verständnis der Erfindung wesentlichen Elemente und Bauteile gezeigt. Die dargestellten erfindunggemäßen Verfahren und Vorrichtungen können somit in vielfältiger Weise ergänzt oder auch in für den Fachmann offensichtlicher Weise modifiziert werden, ohne daß hierdurch der Erfindungsgedanke verlassen oder abgeändert wird.

### Wege zur Ausführung der Erfindung

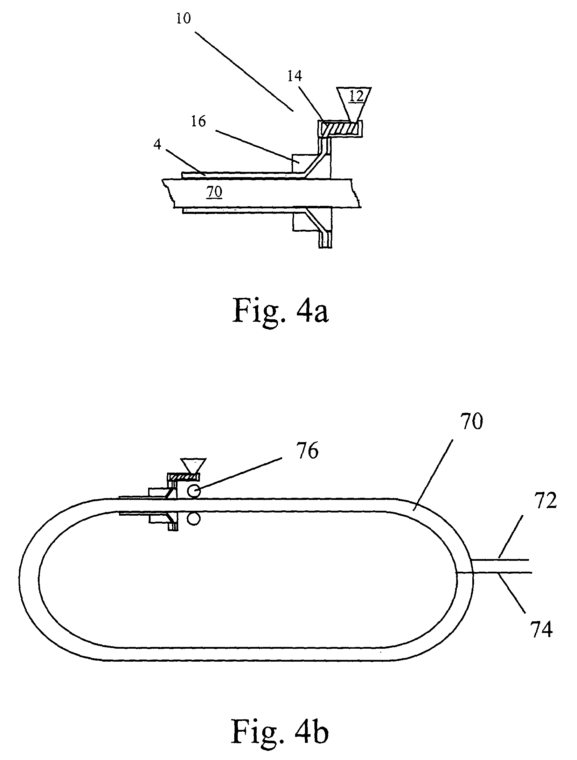

Figur 4b zeigt eine Spulenurform 70, die in einem Extrudierverfahren mit einer Hauptisolierung versehen wird. Spulenurformen werden gefertigt, indem ein langer, isolierter Einzelleiter zu einer ebenen, ovalen Spule gewickelt wird. Der Anfang des langen isolierten Leiters kann z.B. als Spulenzuleitung 72 verwendet werden, während das Ende des Leiters dann als Spulenableitung 74 verwendet wird. In einem anschließenden Vorgang, der sogenannten Spreizung, werden die Spulenurformen bzw. Fische in ihre endgültige Form überführt und in den Stator eingebaut.

Zur Fertigung von Spulenurformen 70 können sowohl runde als auch rechteckige Einzelleiter eingesetzt werden. Die für die Statorwicklungen aus einem Einzelleiter gefertigten Spulenurformen 70 können wiederum jeweils runde bzw. rechteckige Querschnitte haben. In der vorliegenden Erfindung werden bevorzugt Spulenurformen 70 mit rechteckigem Querschnitt, die bevorzugt aus einem rechteckigen Einzelleiter gefertigt wurden betrachtet. Bei Verwendung von rechteckigen Querschnitten werden die Vorteile der Erfindung auch dann erzielt, wenn der Querschnitt des Einzelleiters und/oder der Spulenurform 70 geringfügig von der Rechtecksform abweichen.

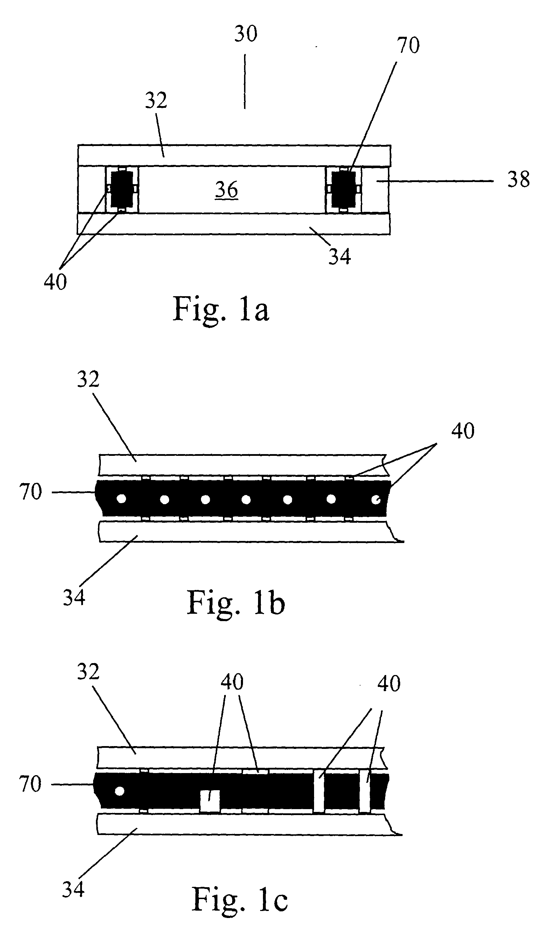

Figur 1a zeigt den Querschnitt durch eine Spritzgußform 30 in der zwei Schenkel einer Spulenurform 70 durch Abstandselemente 40 in den Gußräumen zentriert sind. Die Spritzgußform 30 besteht aus einem Deckel 32 und einer Bodenplatte 34. Zwischen zwei Gußräumen ist ein Mittelteil 36 angeordnet, welches jeweils eine Seitenwand eines der benachbarten Gußraums bildet. Die beiden anderen Seitenwände der zwei Gußräume werden durch Randstücke 38 geformt. In der Zeichnung sind die beiden Schenkel einer Spulenurform gezeigt. Die an ihren Enden offenen Spritzgußformen umfassen lediglich einen Teilbereich der Spulenurform 70.

Die in Figur 1a gezeigte Spritzgußform 30 zeigt 2 Gußräume. Die Anzahl der Gußräume pro Spritzgußform kann aber jederzeit variiert werden. Eine Reduzierung auf eine Gußform erfolgt z.B. durch Herausnahme des Mittelteils 36 und Verschieben von zumindest einem der beiden Randstücke 38 in Richtung des anderen Randstücks. Eine Vermehrung der Gußräume hingegen erfolgt z.B. durch Verwendung von mehreren, in ihrer Breitenausdehnung reduzierten Mittelteilen 36. So kann der in Figur 1a gezeigte Mittelteil 36 durch zwei schmalere Mittelteile ersetzt werden, die zwischen sich eine weitere Gußform ausbilden.

Die einzelnen Teile der Spritzgußform 30, d.h. insbesondere Deckel 32, Bodenplatte 34, Mittelteil(e) 36 und Randstücke 38 können in ihren geometrischen Abmessungen so variiert werden, daß sie Elemente eines Baukastensystems bilden und so eine Vielzahl von möglichen Spulengeometrien (Querschnitt, Länge, Radien) abdecken. Die Verwendung von Mittelteilen 36 und Randstücken 38 unterschiedlicher Höhen erlaubt, bei sonst gleichbleibenden geometrischen Ausdehnungen der Spritzgußform, die Beschichtung von Spulenurformen mit unterschiedlichen Querschnitten, z.B. Spulenurformen 70 gleicher Breite aber unterschiedlicher Höhe. Alternativ kann ein Schenkel einer Spulenurform entsprechender Höhe, welcher 90 Grad um seine Längsachse gedreht ist, in die Gußform gelegt werden, um so Spulenurformen 70 gleicher Höhe aber unterschiedlicher Breite zu beschichten. Kleinere Variationen im Spulenquerschnitt können auch durch größere Schichtdicken der zu gießenden Hauptisolierung aufgefangen werden. Durch Kombination von Mittelteilen 36 und Randstücken 38 unterschiedlicher Höhe mit Mittelteilen 36 und Randstücken 38 unterschiedlicher Breite kann eine Vielzahl verschiedenster Querschnitte von Spulenurformen beschichtet werden. Weiterhin kann die Flexibilität des Baukastensystems für die Spritzgußformen durch Verwendung von Abstandsplatten erhöht werden. Diese Platten können vorteilhaft an die Seiten-, Boden- bzw. Deckenplatten der Gußräume angeordnet werden, um den Gußraum in seiner Breite oder Höhe zu verkleinern.

In einer bevorzugten Ausführung sind die Isolierdicken auf den Schmalseiten und Breitseiten der Leiterspule gleich. In einer besonders vorteilhaften Ausführung ist die Isolierungsdicke auf den Schmalseiten der Leiter größer als auf den Breitseiten, womit an den Leiterkanten die elektrische Feldüberhöhung abgebaut wird, ohne die Abfuhr der Wärme über die Breitseite zu behindern.

In einer weiteren nicht gezeigten Ausführungsform sind Spritzgußformen vorgesehen mit denen bereits gebogene Abschnitte der Leiterspule mit einer Hauptisolierung versehen werden können. Hierfür weist die Spritzgußform dreidimensional geformte Sektionen auf, die bevorzugt an gewisse Toleranzen der Leiterspule angepaßt werden können. Es bietet sich eine Standardisierung der Radien an. So kann die Spritzgußform, je nach Geometrie der Spulenurform, aus Komponenten eines Baukastensystems zusammengesetzt werden, was die Kosten für Spritzgußformen deutlich senkt. Ein Teil der durch Verwendung von einfachen und billigen Spritzgußformen gewonnenen Vorteile geht bei den für gebogene Leiterspulen ausgelegten Spritzgußformen verloren. Jedoch kann diese bei großer Stückzahl wieder kompensiert werden, insbesondere wenn die an bereits gebogene Leiterspulen angepaßten Formen durch Standardisierung für mehrere Typen verwendet werden können.

Die komplizierten Formen rechtfertigen sich auch dann, wenn Isolierung und Aussenglimmschutz in einem Arbeitsgang aufgebracht werden können. Dies erfolgt zum Beispiel durch bewegliche Sektionen mittels derer die Schichten durch Spritzen, Vernetzen, Sektion verschieben, Spritzen, Vernetzen, ... aufgebracht werden. Alternativ kann ein Mehrkomponenten-Spritzgießverfahren angewandt werden.

Figur 1b zeigt einen Längsschnitt durch einen der in Figur 1a gezeigten Gußräume. Die zylindrischen Abstandselemente 40 zentrieren dabei einen Arm der Spulenurform 70 im Normalfall so in dem Gußraum, daß die Schichtdicke der Hauptisolierung auf allen Seiten gleich hoch ist. Durch Verwendung unterschiedlich hoher Abstandselemente kann bei Bedarf eine Hauptisolierung unterschiedlicher Schichtdicke um die Spulenurform 70 gelegt werden. Es ist dabei nicht notwendig zylindrische Abstandselemente 40 zu verwenden. Abstandselemente mit quadratischem oder rechteckigem Querschnitt erfüllen den selben Zweck, erleichtern jedoch das Beabstanden der Spule von den Seitenwänden, da sie mit einer ihrer Schmalseite auf dem Boden der Gußform aufgelegt werden können, ohne davon zu rollen. Abstandselemente 40 mit rechteckigem Querschnitt sind in Figur 1 c gezeigt. Alternativ dazu können Abstandselemente verwendet werden, welche die Spulenurform völlig umschließen. Bevorzugt werden vollständig umschließende Abstandselemente 40 auf einer ihrer Seiten aufgeschnitten, um sie leichter um die Spule zu legen.

Die Zentrierung der Spule im Gußraum (bei einer Hauptisolierung gleicher Schichtdicke) bzw. die Beabstandung der Spule von den einzelnen Wänden des Gußraums geschieht, wie bereits erwähnt, durch die Verwendung von Abstandselementen 40 unterschiedlicher Form und Höhe, die in geeignetem Abstand voneinander auf der Spule oder im Gußraum plaziert werden. Bevorzugt sind die Abstandselemente aus dem gleichen Material wie die Hauptisolierung gefertigt. Durch Teilvernetzung des Materials erhalten die Abstandselemente eine gewisse Formstabilität. Andererseits weisen sie noch ausreichend reaktive Bindungen auf, um mit dem angegossenen Material der Hauptisolierung eine feste chemische Verbindung einzugehen. In Abhängigkeit vom verwendeten Material kann durch einfache Versuche herausgefunden werden, welcher Vernetzungsgrad im Material der Abstandselemente vorliegen muß, um an den Grenzflächen die selben bzw. gleichwertige mechanische und elektrische Festigkeiten zu erzielen wie im homogenen, nicht durch Grenzflächen durchsetzten Material der Hauptisolierung.

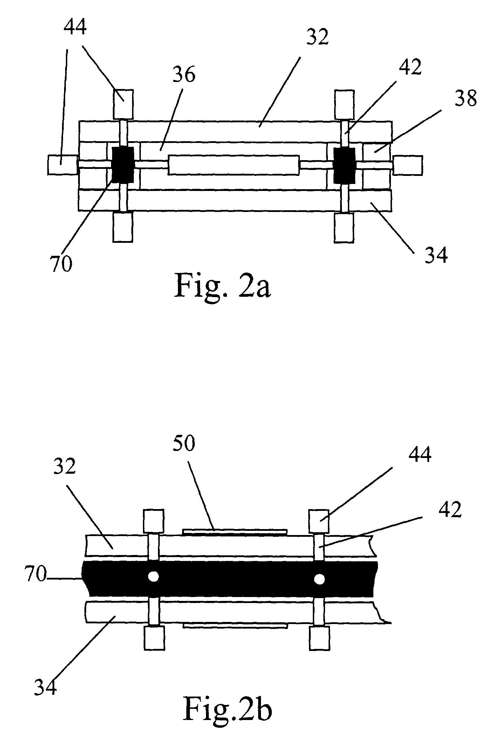

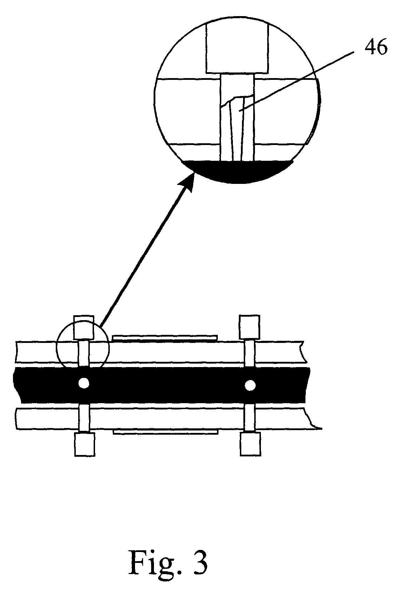

In Figur 2a und 2b werden zwei Schenkel einer Spulenurform 70 durch justierbare Dorne 42 im Gußraum der Spritzgußform zentriert bzw. von den Wänden des Gußraums beabstandet. Ein Stellglied 44 erlaubt eine genaue Justierung der einzelnen Dorne 42, die auch bei geschlossener Spritzgußform definiert bewegt werden können. Während des Einspritzvorgangs des Elastomers und der einsetzenden Vernetzung werden die Spulen von den Dornen in der gewünschten Lage gehalten. Bei fortschreitender Vernetzung erreicht das als Material für die Hauptisolierung eingespritzte Elastomer eine Festigkeit, welche die Spule auch ohne Dorne in ihrer gewünschten Lage hält. Nachdem die Hauptisolierung diese Festigkeit erreicht hat, werden die Dorne 42 zurückgezogen und die entstehenden Hohlräume durch flüssiges Elastomer aufgefüllt. Das Einspritzen des flüssigen Materials in die Hohlräume erfolgt durch in den Dornen 42 befindliche Einspritzkanäle 46 (siehe Fig. 3). Das im Bereich der Dorne eingespritzte Material kann flüssig oder gelförmig sein, muß aber noch ausreichend reaktionsfähige Verbindungen aufweisen, damit die mechanischen und elektrischen Eigenschaften der Hauptisolierung an der Grenzfläche denen des homogenen Materials der Hauptisolierung entsprechen. Das angrenzende Material um die Dorne herum darf bereits fest sein und es muß noch reaktionsfähig sein. Zur Förderung der Vernetzung an der Grenzfläche kann beispielsweise mittig zwischen zwei Distanzdornen eine Heizregion 50 angeordnet werden (siehe Fig. 2b). Die Wärme und damit die Vernetzungsfront breitet sich somit von der Heizregion ausgehend in Richtung der Dorne aus, so daß dort die Vernetzung mit einer zeitlichen Verzögerung einsetzt und das sich in der Umgebung der Dorne befindliche Material noch ausreichend mit dem frisch durch den Einspritzkanal 46 zugeführten Elastomer reagieren kann. Alternativ dazu oder ergänzend können die Dorne 42 gekühlt werden. Durch die Kühlung wird erreicht, daß das Material im Dorn und um den Dorn noch nicht vernetzt.

Die in Figuren 1 und 2 gezeigten Spritzgußformen sind bevorzugt an ihren Längsenden offen gestaltet und werden von Dichtkappen abgeschlossen, welche die Spulenurform druckfest umschließen. Um die Spulenurform 70 entlang ihrer vollständigen Länge zu isolieren, kann die Hauptisolierung auch in einem oder mehreren Schritten aufgebracht werden bzw. werden mehrere Spritzgußformen aus dem Baukastensystem zu einer Teil- oder Komplettspritzgußform zusammengesetzt. Die entstehenden Nahtstellen bei schrittweisem Spritzgießen können entsprechend oben beschriebener Vernetzungsverfahren ausgebildet werden. Dies gewährleistet auch an den Nahtstellen die geforderten Materialeigenschaften.

In Figur 4a ist ein Extruder 10 gezeigt, der den zu verarbeitende Werkstoff, das Elastomer, als Formmasse aus einer Druckkammer im plastifizierten Zustand über ein entsprechend profiliertes Extruderwerkzeug durch eine Düse kontinuierlich ins Freie preßt. Es entsteht dabei ein rechteckiger Schlauch in einem endlosem Strang, der die Spulenurform 70 als eine Isolierschicht 4 ummantelt. Über einen Beschickungsaufsatz 12 wird das Rohmaterial (z.B. als Kautschukstreifen von der Rolle, als Granulat oder Pulver) einem Umwandlungsbereich 14 zugeführt, in dem es verdichtet, vorgewärmt und in eine plastifizierte Formmasse umgewandelt wird. Der Transport innerhalb des Umwandlungsbereichs 14 erfolgt zum Beispiel mittels einer Schnecke. Ein Umformwerkzeug 16 besorgt die anschließende Formung des Materialschlauchs auf den rechteckigen Spulenquerschnitt. Es kann sowohl ein Extruderkopf mit rundem Querschnitt im Einlaßbereich (und anschließender Umformung), als auch ein Extruder verwendet werden, der bereits im Materialeinlaßbereich einen rechteckigen Querschnitt besitzt. Die Materialeigenschaften der Hauptisolierung können durch Zugabe von aktiven (z.B. Kieselsäure) und passiven (z.B. Quarzsand) Füllstoffen so eingestellt werden, daß sie den entsprechenden mechanischen Anforderungen der elektrischen Maschinen genügen, in welche die mit der Hauptisolierung versehenen Statorwicklungen eingebaut werden.

Figur 4b zeigt eine sich im Extruder befindliche Spulenurform 70. Bei nicht zu kleinen Radien an den Schmalseiten der Spulenurform kann der Extrudiervorgang kontinuierlich um die gesamte Spulenurform herum durchgeführt werden. Der Extruderkopf muß so aufgebaut sein, daß er um die Spulenurform gelegt werden kann (siehe z.B. DE 43 26 650 A1), da eine geschlossene Spule nicht analog zu einem einzelnen Leiter oder Leiterstab von einer Seite in den Extruderkopf geführt wird. Durch entsprechende Gestaltung des Extruderkopfes (siehe z.B. US 5 650 031) ist auch eine Ummantelung der Krümmung der Spulenurform möglich. In diesem Fall wird der Extruderkopf vorteilhaft auf einer Seite der Spulenurform angesetzt (z.B. an der Spulenableitung 74) und entlang der Spulenurform bis zu ihrem anderen Ende (Spulenzuleitung 72) geführt.

Preßrollen 76 die stromaufwärts des Extruders angeordnet sind, halten die Einzelleiter der Spulenurform dicht zusammen, um ein gleichmäßiges und hohlraumfreies Ummanteln der Spulenurform mit der Hauptisolierung zu ermöglichen. Andere Möglichkeiten die Einzelleiter der Spulenurform eng aneinanderliegend zu halten sind z.B. provisorisches Verkleben der Einzelleiter mit einem elastischen Material oder einem gegen Scherkräfte mechanisch schwachem Kleber, wodurch das spätere Verbiegen (Spreizen) der Spule nicht behindert wird. Alternativ kann auch ein Kleber verwendet werden, der bei mäßiger Erwärmung (z.B. vor dem Spreizen) seine Klebekraft verliert und damit den Biegevorgang begünstigt. Diese Maßnahmen können auch vorteilhaft bei den Spritzgußverfahren eingesetzt werden.

In manchen Anwendungen werden die Spulenurformen 70 bevorzugt mit Nutglimmschutz und Absteuerung (Bügelglimmschutz) versehen. Der Nut- bzw. Aussenglimmschutz einer Statorwicklung ist in der Regel eine zwischen Hauptisolierung und Statornut angeordnete leitfähige Materialschicht. Mit dem Außenglimmschutz, welcher einen definierten Potentialbelag erzeugt, sollen elektrische Entladungen verhindert werden, die beispielsweise durch unterschiedliche Abstände der auf hohem Potential liegenden, isolierten Spule von der auf Masse liegenden Statornut hervorgerufen werden können. Im Rahmen der Erfindung verwendete Möglichkeiten zur Aufbringung solcher Schutzschichten sind beispielsweise leitfähige bzw. halbleitfähige Anstriche auf Elastomerbasis, entsprechende Bänder (u.U. selbstverschweißend) die durch Strahlung oder Wärme vernetzt werden können. Alternativ können kalt- oder warmschrumpfende Manschetten verwendet werden. Grundsätzlich können für den Außenglimmschutz auch fließfähige, plastische Materialien verwendet werden.

In einer weiteren bevorzugten Ausgestaltung des Verfahrens werden Hauptisolierung und/oder Außenglimmschutz mittels mehrerer nacheinander durchgeführter Spritzgußverfahren bzw. durch zwei- bzw. dreifache Ko-Extrusion aufgebracht. Beim Spritzgußverfahren kann dies in verschiedenen Spritzgußformen mit unterschiedlichem Querschnitt erfolgen oder in ein und derselben Form, wobei dann der Gußraum während der entsprechenden Spritzgußschritte mit Füllprofilen (Abstandsplatten) versehen wird, um Platz für die folgende Schicht zu lassen. Weiterhin besteht die Möglichkeit den Gußraum mit beweglichen Sektionen auszustatten. Bewegliche Sektionen sind Teile einer Gießform, die so angeordnet werden können, daß z.B. nur im Bereich der Absteuerung (Nutglimmschutzende bis Ende Absteuerung) eine zusätzliche Schicht eingespritzt wird.

Die Nutglimmschutzschicht wird bevorzugt nur in dem Bereich des Stabes aufgebracht, der später in der Nut zu liegen kommt. Der Bügelglimmschutz zur Verhinderung von Spitzenentladungen am Ende des Nutglimmschutzes kann durch die bereits erwähnten Verfahren aufgebracht werden.

In einer gegenüber dem Stand der Technik modifizierten, jedoch nicht dargestellten Spreizvorrichtung wird die Spulenurform in eine für den Einbau in den Stator geeignete Form gebracht. Bereiche der isolierten Spulenurform werden in Spannbacken der Spreizvorrichtung gelegt und dort durch Bewegung der Spannbacken gegenüber Radienwerkzeugen gebogen. Zwischen den Radienwerkzeugen und der Hauptisolierung der Spulenurform ist eine Schutzlage, die den an den Radienwerkzeugen entstehenden Druck flächenmäßig verteilt und so ein übermäßiges Quetschen der Isolierschicht verhindert. Durch die gleichmäßig verteilte mechanische Belastung der Isolierschicht aus Elastomer werden Beschädigungen verhindert. Das Biegen der Evolvente führt zu sehr großen Dehnungen in der Isolierschicht, die bei herkömmlichen Materialien wie Hochtemperatur-Thermoplaste zu Brüchen führt. Polyethylen hätte die notwendige Flexibilität jedoch nicht die für übliche elektrische Maschinen erforderliche Temperaturbeständigkeit, könnte jedoch für Maschinen mit geringer thermischer Ausnutzung (T < 90° C) prinzipiell in ähnlicher Weise eingesetzt werden. Gleiches gilt für andere, flexible Thermoplaste.

Ein Querschnitt durch die Spulenurform zeigt ein Bündel von Einzelleitern. Durch das Biegen der bereits mit der Hauptisolierung versehenen Spulenurform erfolgt eine Relativverschiebung der Einzelleiter untereinander als auch der an der Oberfläche der Spulenurform liegenden Einzelleiter gegenüber der Hauptisolierung. Vorteilhaft ist die zwischen Spulenurform und Hauptisolierung liegende Grenzschicht so beschaffen, daß sie eine reibungsreduzierte Verschiebung der Einzelleiter gegenüber der Hauptisolierung ermöglicht. Dies kann z.B. durch Behandlung des Leiterstabs mit Trennmitteln erreicht werden. Ohne Innenglimmschutz ist die Verschiebung zumeist unkritisch, da im Biegebereich (nach der Absteuerung) das Feld reduziert ist.

Als Material für die Hauptisolierung wird ein Elastomer verwendet. Das Elastomer zeichnet sich durch hohe Elastizität aus. Darüber hinaus weist es eine hohe elektrische und thermische Beständigkeit auf. Insbesondere bei thermisch hoch belasteten Maschinen werden bevorzugt Silikonelastomere verwandt. Gerade die vorteilhafte Verwendung von Elastomer (im Gegensatz zu anderen Materialien) erlaubt die Anwendung von Spritzguß- bzw. Extrudierverfahren und wird den hohen Anforderungen an die Resistenz des Materials und an seine mechanische Flexibilität gerecht. Bei den Elastomeren kann es sich um kalt- oder warmvernetzende Typen handeln. Die Vernetzung bei den kaltvernetzenden Typen wird z.B. durch Vermischung zweier Komponenten gestartet, wobei eine der Komponenten einen Vernetzer enthält. Bei den warmvernetzenden Typen kann das Elastomer bereits in der Spritzgußform und/oder nach Ummantelung der Spulenurform 70 erwärmt werden. Letzteres erfolgt vorteilhaft durch Heißluft (Ofen) oder durch resistive bzw. induktive Erwärmung der Spulenurform.

### Bezugszeichenliste

- 4: Isolierschicht
- 10: Extruder
- 12: Beschickungsaufsatz
- 14: Umwandlungsbereich
- 16: Umformwerkzeug
- 30: Spritzgußform
- 32: Deckel
- 34: Bodenplatte
- 36: Mittelteil
- 38: Randstück
- 40: Abstandselement
- 42: Dorn
- 44: Stellglied
- 46: Einspritzkanal
- 50: Heizregion
- 70: Spulenurform
- 72: Spulenzuleitung
- 74: Spulenableitung
- 76: Preßrolle

## Patentansprüche

1. Verfahren zum Aufbringen der Hauptisolierung von Spulenurformen, insbesondere für Statorwicklungen, wobei die Spulenurform einen rechteckigen Querschnitt aufweisen und die Hauptisolierung aus Elastomer besteht.

2. Verfahren nach Anspruch 2, wobei die Ummantelung mit einen Silikonelastomer erfolgt.

3. Verfahren nach einem der vorstehenden Ansprüche wobei die Ummantelung durch ein Extrudierverfahren erfolgt.

4. Verfahren nach einem der Ansprüche 1 - 2, wobei die Ummantelung durch ein Spritzgußverfahren erfolgt.

5. Verfahren nach einem der vorstehenden Ansprüche, wobei die Spulenurform durch Spreizung in eine andere Form überführt wird.

6. Verfahren nach einem der vorstehenden Ansprüche, wobei Spulenurformen bestehend aus Einzelleitern verwendet werden, wobei die Einzelleiter bevorzugt rechteckigen Querschnitt aufweisen.

7. Verfahren nach Anspruch 6, wobei die Einzelleiter provisorisch miteinander verbunden sind

8. Verfahren nach einem der Ansprüche 1 bis 7, wobei die Hauptisolierung auf allen Seiten in gleicher Dicke aufgetragen wird.

9. Verfahren nach einem der Ansprüche 1 bis 7, wobei die Hauptisolierung auf der Schmalseite dicker aufgetragen wird als auf der Breitseite.

10. Isolierte Spulenurformen 70 bzw. Spulen für Statorwicklungen, gefertigt nach einem der vorstehenden Verfahren.
